# EUROPÄISCHE PATENTSCHRIFT

(11) **EP 0 830 800 B1**
(45) Veröffentlichungstag und Bekanntmachung des Hinweises auf die Patenterteilung: **13.09.2000**
(21) Anmeldenummer: 96919808.4
(22) Anmeldetag: 24.05.1996
(51) Int. Cl.: H04Q 11/04

(54) **VERFAHREN ZUM DETEKTIEREN UND KOMPENSIEREN FEHLENDER UND/ODER FEHLERHAFT EINGEFÜGTER ZELLEN BEI DER ASYNCHRONEN TRANSFERMETHODE (ATM)**
PROCESS FOR DETECTING AND COMPENSATING FOR MISSING OR INCORRECTLY INSERTED CELLS IN THE ASYNCHRONOUS TRANSFER METHOD (ATM)
PROCEDE DE DETECTION ET DE COMPENSATION DE L'ABSENCE OU DE L'INSERTION INCORRECTE DE CELLULES DANS LA METHODE DE TRANSFERT ASYNCHRONE (ATM)

(30) Priorität: 02.06.1995 BE 9500487
(43) Veröffentlichungstag der Anmeldung: 25.03.1998
(73) Patentinhaber: SIEMENS AKTIENGESELLSCHAFT, 80333 München (DE)
(72) Erfinder: BES, Hugo, B-2260 Westerlo (BE)
(86) Internationale Anmeldenummer: EP9602255
(87) Internationale Veröffentlichungsnummer: WO9639003

(56) Entgegenhaltungen:
- EP-A- 0 570 813
- US-A- 5 163 057
- PATENT ABSTRACTS OF JAPAN vol. 018, no. 342 (E-1570), 28.Juni 1994 & JP,A,06 085834 (MITSUBISHI ELECTRIC CORP;OTHERS: 01), 25.März 1994,

## Beschreibung

Die Erfindung betrifft ein Verfahren zum Detektieren und Kompensieren fehlender und/oder fehlerhaft eingefügter Zellen auf der Empfangsseite bei der Übertragung von ATM-Zellen (Asynchrone Transfermodus-Zellen) mit einer Anpassungsschicht (AAL = ATM Adaption Layer) vom Typ 1, wobei den Zellen eine Rangfolgenummer (mit beispielsweise maximal acht Rangstellen) sowie ein Fehlererfassungs- und -korrekturcode zugeteilt wird, der angibt, ob die Rangfolgenummer und davon abhängige zusätzliche Informationen korrekt übertragen sind oder nicht, und wobei auf der Basis dieser Daten entschieden wird, ob eine Zelle verworfen oder weitergesendet wird, und ob fehlende oder fehlerhaft eingefügte Zellen vorhanden sind.

Die asynchrone Transfermethode (ATM) ist seit 1988 von ITU-T als Transportmechanismus für B-ISDN-Breitbandkommunikationsnetzwerke ausgewählt. Hierbei wird die Benutzerinformation in Zellen mit einer festen Länge von 48 Byte übertragen, denen ein Kopf mit einer Länge von 5 Byte vorangeht.

Das Verpacken der Benutzerinformation in Zellen in Senderichtung und das Auspacken der Benutzerinformation in Empfangsrichtung erfolgt in der ATM-Anpassungsschicht (AAL). Wenn die Benutzerinformation aus einem kontinuierlichen Bitstrom, z.B. einem PCM-Sprachsignal, besteht, verwendet man die Anpassungsschicht vom Typ 1.

Die Anpassungsschicht ist in zwei Subschichten aufgeteilt, nämlich in eine Konvergenz- oder Anpassungs-Subschicht (CS-Subschicht) und eine Segmentierungs- und Wiederzusammensetzungs-Subschicht (SAR-Subschicht).

An der Sendeseite sammelt die CS-Subschicht die Benutzerinformationen solange, bis sie 47 Bytes empfangen hat. Diese 47 Bytes werden zusammen mit der Rangfolgenummer (3 Bit) und eventuell anderen Information (1 Bit) an die SAR-Subschicht weitergeleitet. Die SAR-Subschicht fügt zu der Rangfolgenummer und der anderen Information einen Fehlererfassungs- und - korrekturcode (4 Bit) hinzu, so daß eine Zelle von 48 Bytes entsteht, die mit Hilfe des ATM-Netzwerks übertragen werden kann. Jedesmal, wenn eine Zelle von 47 Bytes von der SC-Subschicht zur SAR-Subschicht weitergeleitet wird, wird die Rangfolgenummer um 1 erhöht und kann einen Wert zwischen 0 und 7 haben. Der Fehlererfassungs- und -korrekturcode gestattet, an der Empfangsseite zu überprüfen, ob die Rangfolgenummer und die zusätzlich Information korrekt empfangen wurden.

An der Empfängerseite leitet die SAR-Subschicht die 47 Byte Benutzerinformation zusammen mit der (aus drei Bit bestehenden) Rangfolgenummer, das Bit mit der von der Rangfolgenummer abhängigen zusätzlichen Information und den Zustandswert der Rangfolgenummer und das genannte Bit, das angibt, ob diese Nummer und dieses Bit korrekt übertragen wurden oder nicht, an die CS-Subschicht weiter. Zur Bestimmung des Zustandswerts verwendet die SAR-Subschicht den Fehlererfassungs- und -korrekturcode.

Durch Verarbeiten der Rangfolgenummer der Zellen und des Zustandswerts können fehlende oder fehlerhaft eingefügte Zellen detektiert werden. Diese Information kann dann in dem Teil der CS-Subschicht weiterverarbeitet werden, in dem die ungleiche Verzögerung der Zellen im ATM-Netzwerk bearbeitet wird.

Ein derartiges Verfahren zum Detektieren und Kompensieren von fehlenden und/oder fehlerhaft eingefügten Zellen ist in einem Anhang der vom European Telecommunications Standards Institute (ETSI) herausgegebenen Publikation ETS DE/NA-52617 "B-ISDN ATM Adaption Layer UAAL) specification, type 1" beschrieben.

Bei diesem bekannten Verfahren werden zwei aufeinanderfolgende Zellen analysiert, und erst nach dieser Analyse wird auf der Basis der Rangfolgenummer der Zelle und des Zustandswerts die Entscheidung getroffen, ob eine Zelle fehlt oder fehlerhaft eingefügt ist. Dies bedeutet, daß eine empfangene Zelle zunächst gespeichert wird, bis die folgende Zelle empfangen ist, und erst dann entweder verworfen oder weiterverarbeitet wird. Wenn festgestellt wird, daß eine oder mehrere Zellen verlorengegangen sind, werden eine oder mehrere fiktive Zellen für die erste der genannten zwei aufeinanderfolgenden Zellen zugefügt, um die richtige Bitanzahl beizubehalten. Wenn die Zelle fehlerhaft eingefügt ist, wird sie vernichtet.

Die Verarbeitung findet somit an einer gespeicherten Zelle statt. Dieses bekannte Verfahren ist im wesentlichen auf einer Verzögerung um eine Zelle aufgebaut, da es zum Detektieren des Vorhandenseins einer fehlenden oder fehlerhaft eingefügten Zelle erforderlich ist, auf eine nachfolgende Zelle zu warten.

Während eine derartige Verzögerung bei qualitativ hochwertigen Audio- und Videodiensten kein Problem darstellt, da an der Empfängerseite der Puffer, der Schwankungen in der Verzögerung von Zellen behandelt, durchschnittlich eine Mehrzahl von Zellen faßt, ist sie jedoch sehr wohl von Nachteil, wenn ein Sprachkanal mit niedriger Bitrate mittels eines AALs vom Typ 1 transportiert wird.

Die Erfindung hat sich die Aufgabe gestellt, ein Verfahren zum Detektieren und Kompensieren fehlender und/oder fehlerhaft eingefügter Zellen bei der Übertragung von ATM-Zellen mit einer Anpassungsschicht vom Typ 1 anzugeben, das auch bei einem Sprachkanal mit niedriger Bitrate anwendbar ist.

Die Lösung dieser Aufgabe ergibt sich aus den Merkmalen von Anspruch 1.

Die erwähnte Verzögerung um eine Zelle wird vermieden. Die Verarbeitungen finden an der zuletzt eingetroffenen Zelle statt.

Zur näheren Erläuterung der Erfindung wird im folgenden ein bevorzugtes Ausführungsbeispiel des Verfahrens gemäß der Erfindung zum Detektieren und Kompensieren fehlender und/oder fehlerhaft eingefügter Zellen bei der asynchronen Transfermethode (ATM) beschrieben, wobei auf die anliegenden Zeichnungen Bezug genommen wird.
Fig. 1 zeigt ein Blockschaltbild zweier Endstellen, die durch ein ATM-Netzwerk verbunden sind,
Fig. 2 zeigt ein Blockschema, anhand dessen das Verfahren zum Detektieren und Kompensieren von fehlenden und fehlerhaft eingefügten Zellen gemäß der Erfindung näher erläutert wird.

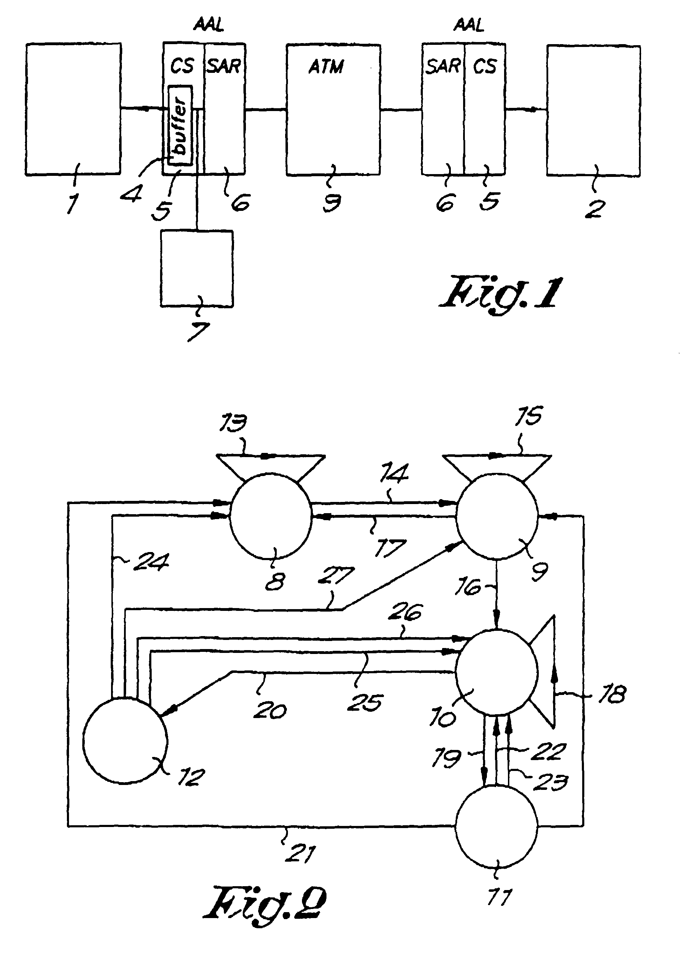

In Fig. 1 sind zwei Endstellen 1 und 2, beispielsweise zwei Endzentralen, dargestellt. Ein Gespräch, das als kontinuierlicher Bitstrom mit einer Bitrate von 64 kbit/s vorliegt, wird über das ATM-Netzwerk 3 von der Endstelle 2 zu der Endstelle 1 übertragen.

Hierzu ist zwischen jeder der Endstellen 1 und 2 und dem Netzwerk 3 eine ATM-Anpassungsschicht oder AAL-Schicht 5, 6 vom Typ 1 angebracht, die aus einer Konvergenz- oder Anpassungssubschicht (CS-Subschicht) 5 auf der Seite der Endstelle des Benutzers, und einer Segmentations- und Wiederzusammenstellungssubschicht (SAR-Subschicht) 6 auf der Seite des ATM-Netzwerks zusammengesetzt ist. Zum Ausgleich der veränderlichen Zellenverzögerung durch das ATM-Netzwerk ist in der Endstelle 1 in der CS-Subschicht ein Puffer 4 vorgesehen.

In der Endstelle 1 ist zwischen der SAR-Subschicht 6 und dem Puffer 4 eine integrierte Schaltung 7 zum Detektieren und Kompensieren fehlender und/oder fehlerhaft eingefügter Zellen angeordnet.

Dieses Detektieren und Kompensieren geschieht gemäß der Erfindung in folgender Weise:

Die Information wird über das ATM-Netzwerk 3, beispielsweise von der Endstelle 2 zu der Endstelle 1, in Form von Zellen von 53 Byte gesendet.

Jede Zelle, die an der Sendeseite von Endstelle 2 durch die CS-Subschicht über die SAR-Subschicht 6 an das Netzwerk 3 geliefert wird, besteht aus einem Kopf mit 5 Byte, dem Zellinhalt (Payload) von 47 Byte und einem Byte mit einer speziellen Funktion.

Dieses letztgenannte Byte umfaßt drei Bits, die die Rangfolgenummer SC (Sequence Count) der Zelle darstellen, ferner ein Bit, das zusätzliche Information liefert, abhängig von der Rangfolge, beispielsweise für das Übertragen der Frequenz und eventuell der Struktur, genannt Convergence Sublayer Indication oder CSI-Bit, sowie vier Bits, die den Fehlererfassungsund -korrekturcode des CSI-Bits und der Rangfolgenummer SC bilden.

Die Rangfolgenummer SC ist ein Wert zwischen Null und sieben. Die CS-Subschicht 5 zählt die Zellen, die an die SAR-Subschicht 6 gesendet werden, bis zu einem Wert von maximal acht, das heißt, ab der achten Zelle wird erneut von Null an gezählt.

Auf der Empfangsseite wird in der SAR-Subschicht anhand des Fehlererfassungs- und -korrekturcodes überprüft, ob die Rangfolgenummer und das CSI-Bit korrekt übertragen wurden. Der Zustandswert gibt an, ob die Übertragung gelungen ist oder nicht. Im ersten Fall ist der Zustandswert gültig, im anderen Fall ist der Zustandswert ungültig. Die SAR-Subschicht liefert den Zustandwert, das CSI-Bit, die Rangfolgenummer und die 47 Byte Benutzerinformation an die CS-Subschicht.

Die Schaltung 7 verwendet die Rangfolgenummer SC und den Zustandswert, um fehlende oder fehlerhaft eingefügte Zellen in der SC-Subschicht zu detektieren und zu kompensieren.

Dieses Detektieren und Kompensieren erfolgt ohne Verzögerung.

Die Entscheidung über die Annahme oder das Verwerfen einer empfangenen Zelle wird unmittelbar getroffen, ohne eine folgende Zelle abzuwarten. Wenn eine Zelle akzeptiert wird, wird sie für weitere Verarbeitung im Puffer 4 gespeichert. Wenn die Zelle verworfen wird, wird sie vernichtet.

Die Entscheidung, daß einer Zelle eine oder mehrere fehlende Zellen vorangehen oder daß eine Zelle eine fehlerhaft eingefügte Zelle ist, wird nach dem Empfang einer folgenden Zelle getroffen.

Falls entschieden wird, daß der erstgenannten Zelle eine oder mehrere fehlende Zellen vorangehen, werden zwischen der erstgenannten Zelle und der vorerwähnten zweiten Zelle eine oder mehrere fiktive Zellen (Dummy Cells) mit der gleichen Gesamtanzahl von Bytes eingebracht.

Für den Fall, daß entschieden wird, daß die erstgenannte Zelle eine fehlerhaft eingefügte Zelle ist, wird diese fehlerhaft eingefügte Zelle akzeptiert, jedoch wird zum Ausgleich eine gleiche Anzahl Bytes der genannten folgenden Zelle und eventuell einer darauf folgenden Zelle verworfen.

Diese Schritte lassen sich durch eine sogenannte Zustandsmaschine (State Machine) mit fünf Zuständen beschreiben, wie dies durch das Blockschema von Fig. 2 angedeutet ist, nämlich Zustand (8) "Start", Zustand (9) "nicht synchronisiert", Zustand (10) "synchronisiert", Zustand (11) "ungültig" und Zustand (12) "nicht in Sequenz", wobei eine Linie zwischen den Zuständen das Ereignis darstellt, das durch die empfangene Zelle verursacht wird und das die Evolution in der Zustandsmaschine und die Handlung, der die empfangene Zelle unmittelbar unterworfen wird, bewirkt.

Der Zustand (8) "Start" ist der Ausgangszustand. Die Zustandsmaschine verbleibt in diesem Zustand, bis ein gültiger Zustandwert empfangen wird. Dies ist durch die Linie 13 dargestellt. Die Zellen werden verworfen.

Wenn der Zustandswert gültig ist, geht die Zustandsmaschine in den Zustand (9) "nicht synchronisiert" über. Dies ist durch die Linie 14 angedeutet.

In diesem Zustand (9) werden folgende Schritte ausgeführt:

Wenn der Zustandswert gültig ist und eine Rangfolgenummer empfangen wird, die mit der vorigen eine Sequenz bildet, wird die empfangene Zelle akzeptiert und geht die Zustandsmaschine über in den Zustand (10) "synchronisiert". Dies ist durch die Linie 16 angedeutet.

Wenn eine Zelle mit einem ungültigen Zustandswert eintrifft, kehrt die Zustandsmaschine zurück zur Position 8 "Start". Dies ist durch die Linie 17 angedeutet.

Einmal im Zustand (10) "synchronisiert", wobei die Rangfolgenummer als synchronisiert angesehen wird, bleibt die Zustandsmaschine in diesem Zustand, solange die Rangfolgenummer einer empfangenen Zelle in Sequenz mit der vorigen Zelle ist.

Diese empfangene Zelle wird akzeptiert. Dies ist durch die Linie 18 angedeutet. In diesem Zustand (10) werden folgende Schritte ausgeführt:

Wenn der Zustandswert ungültig ist, geht die Zustandsmaschine zum Zustand (11) "ungültig" über. Dies ist durch die Linie 19 angedeutet. Die empfangene Zelle wird jedoch akzeptiert.

Wenn der Zustandswert gültig ist und die Rangfolgenummer nicht in Sequenz mit der vorigen Zelle ist, geht die Zustandsmaschine in den Zustand (12) "nicht in Sequenz". Dies ist durch die Linie 20 angedeutet. Die empfangene Zelle wird akzeptiert.

Im Zustand (11) "ungültig" muß die Zustandsmaschine eine Entscheidung bezüglich der zuvor empfangene Zelle mit dem ungültigen Zustandswert treffen, wenn sie die nachfolgende Zelle empfängt. In diesem Zustand (11), finden folgende Schritte statt:

Wenn der Zustandswert wiederum ungültig ist, geht die Zustandsmaschine zurück zum Zustand (1) "Start". Dies ist durch die Linie 21 angedeutet. Die empfangene Zelle wird dabei verworfen.

Wenn der Zustandswert gültig ist und die Rangfolgenummer mit der zuletzt empfangenen Zelle mit einer gültigen Rangfolgenummer in Sequenz ist, kehrt die Zustandsmaschine zurück zum Zustand (10) "synchronisiert". Dies ist durch die Linie 22 angedeutet. Die vorige Zelle wird jedoch als eine fehlerhaft eingefügte Zelle betrachtet. Eine der Zahl Bytes der fehlerhaft eingefügten Zelle entsprechende Anzahl von Bytes der empfangenen Zelle und eventuell der folgenden empfangenen Zelle wird verworfen.

Wenn der Zustandswert gültig ist, jedoch eine Rangfolgenummer besitzt, die die Rangfolgenummer der zuletzt empfangenen Zelle mit einem gültigen Zustandswert um zwei übersteigt, wird angenommen, daß, die vorige Zelle eine Zelle mit einer falschen Rangfolgenummer ist, obwohl ein ungültiger Zustandswert vorlag. Die empfangene Zelle wird akzeptiert, und die Zustandsmaschine kehrt zurück in den Zustand (10) "synchronisiert". Dies ist durch die Linie 23 angedeutet.

Im Zustand (12) "nicht in Sequenz" werden beim Eintreffen einer Zelle folgende Schritte ausgeführt:

Wenn der Zustandswert ungültig ist, wird die empfangene Zelle verworfen, und die Zustandsmaschine kehrt in den Zustand (1) "Start" zurück. Dies ist durch die Linie 24 angedeutet.

Wenn der Zustandswert gültig ist und die Rangfolgenummer mit der zuletzt empfangenen Zelle, die eine Rangfolgenummer besitzt, eine Sequenz bildet, kehrt die Zustandsmaschine zurück in den Zustand (10) "synchronisiert". Dies ist durch die Linie 25 angedeutet. Die zuvor empfangene Zelle wird jedoch als fehlerhaft eingefügte Zelle betrachtet. Von der empfangenen Zelle und eventuell der folgenden empfangenen Zelle werden eine Anzahl Bytes, gleich der Anzahl Bytes der fehlerhaft eingefügten Zelle, verworfen.

Wenn der Zustandswert gültig ist und die Rangfolgenummer in Sequenz mit der Rangfolgenummer der vorigen empfangenen Zelle ist, nimmt die Zustandsmaschine an, daß Zellen fehlen. Sie fügt zwischen die vorige empfangene Zelle und die zuletzt empfangene Zelle eine Anzahl fiktiver Zellen ein, die gleich der Anzahl fehlender Zellen ist. Die zuletzt empfangene Zelle wird akzeptiert, und die Zustandsmaschine kehrt zurück in den Zustand (10) "synchronisiert". Dies ist durch die Linie 26 angedeutet.

Wenn der Zustandswert gültig, aber nicht in einem der beiden genannten Zustände ist, verwirft die Zustandsmaschine die empfangene Zelle und geht in den Zustand (9) "nicht synchronisiert" über. Dies ist durch die Linie 27 angedeutet.

Das vorangehend beschriebene Verfahren ist relativ ähnlich dem vorangehend genannten bekannten Standardverfahren, das durch ETSI vorgestellt ist, so daß an der bekannten Schaltung, die für das bekannte Verfahren verwendet wird, sehr wenig verändert werden muß, um das vorangehend beschriebene Verfahren gemäß der Erfindung ausführen zu können.

Gemäß der Erfindung können fehlende und fehlerhaft eingefügte Zellen detektiert werden, ohne daß eine Verzögerung der Zellen erforderlich ist. Fiktive Zellen werden nach der Zelle, die auf eine fehlende Zelle folgt, zugefügt, und fehlerhaft eingefügte Zellen werden akzeptiert, jedoch durch das Verwerfen derselben Anzahl Bytes der Zelle oder Zellen, die auf die fehlerhaft eingefügte Zelle folgen, kompensiert.

## Patentansprüche

1. Verfahren zum Detektieren und Kompensieren fehlender und/oder fehlerhaft eingefügter Zellen auf der Empfangsseite bei der Übertragung von ATM-Zellen, mit einer Anpassungsschicht AAL vom Typ 1, wobei den Zellen eine Rangfolgenummer sowie ein Fehlererfassungs- und -korrekturcode zugeteilt wird, der angibt, ob die Rangfolgenummer und eine davon abhängige zusätzliche Information korrekt übertragen sind oder nicht, und wobei auf der Basis dieser Daten entschieden wird, ob eine Zelle verworfen oder weiterbehandelt wird und ob eine fehlende Zelle oder fehlerhaft eingefügte Zellen vorhanden ist bzw. sind,
**dadurch gekennzeichnet,**
daß unmittelbar mit jedem Empfang einer Zelle mit Hilfe des dieser zugeteilten Fehlererfassungs- und -korrekturcodes die Fehlerfreiheit der in der jeweiligen Zelle enthaltenen Rangfolgenummer sowie der genannten zusätzlichen Information überprüft wird,
daß die jeweilige Zelle bei Ermittlung einer Fehlerfreiheit weiterbehandelt, anderenfalls dagegen verworfen wird, daß zusätzlich anhand der letzten zwei aufeinanderfolgenden, für eine Weiterbehandlung vorgesehenen Zellen verglichen wird, ob durch die in diesen beiden Zellen enthaltenen Rangfolgenummern eine festgelegte Sequenz eingehalten wird, daß für den Fall, daß der Vergleich einen Ausfall einer oder mehrerer Zellen ergibt, eine oder mehrere fiktive Zellen mit einer gleichen Gesamtanzahl Bytes zwischen die beiden gerade miteinander verglichenen Zellen eingefügt wird bzw. werden, und daß für den Fall, daß der Vergleich ergibt, daß von den beiden miteinander verglichenen Zellen die zuerst empfangene Zelle hinsichtlich der Rangfolgenummer als fehlerhaft eingefügt angesehen wird, diese damit fehlerhaft eingefügte Zelle trotzdem weiterbehandelt wird, zum Ausgleich jedoch eine gleiche Anzahl von Bytes der bei dem Vergleich zuletzt empfangenen Zelle und eventuell einer darauf folgenden Zelle verworfen werden.

2. Verfahren gemäß Anspruch 1,
**dadurch gekennzeichnet,**
daß eine Zustandsmaschine mit fünf Zuständen verwendet wird, nämlich "Start" (8), "nicht synchronisiert" (9), "synchronisiert" (10), "ungültig" (11) und "nicht in Sequenz" (12), wobei die Zustandsmaschine folgende Evolution durchläuft und auf die Zellen in folgender Weise einwirkt:
- im Ausgangszustand "Start" (1) werden die Zellen verworfen, bis ein gültiger Zustandswert empfangen wird, wonach die Zustandsmaschine in den Zustand (9) "nicht synchronisiert" übergeht;
- in diesem Zustand "nicht synchronisiert" (9) bleiben die Zellen solange verworfen, bis eine Rangfolgenummer empfangen wird, die mit der vorigen eine Sequenz bildet, wodurch die empfangene Zelle akzeptiert wird und die Zustandsmaschine in den Zustand "synchronisiert" (10) übergeht; wenn eine Zelle mit einem ungültigen Zustandswert eintrifft, kehrt die Zustandsmaschine zurück in den Zustand "Start" (8) zurück
- im Zustand "synchronisiert" (10) werden die Zellen akzeptiert, solange der Zustandswert gültig ist und die Rangfolgenummer einer empfangenen Zelle mit der vorigen Zelle eine Sequenz bildet; wenn der Zustandswert ungültig ist, geht die Zustandsmaschine in den Zustand "ungültig" (11) über, die empfangene Zelle wird jedoch trotzdem akzeptiert; wenn der Zustandswert gültig ist und die Rangfolgenummer mit der der vorigen Zelle keine Sequenz bildet, geht die Zustandsmaschine in den Zustand "nicht in Sequenz" (12) über, und die empfangene Zelle wird ebenfalls akzeptiert;
- Im Zustand "ungültig" (11) trifft die Zustandsmaschine eine Entscheidung bezüglich der vorher empfangenen Zelle mit dem ungültigen Zustandswert, wenn sie die folgende Zelle empfängt; wenn der Zustandswert wieder ungültig ist, kehrt die Zustandsmaschine in den Zustand (1) "Start" zurück, und die empfangene Zelle wird dabei verworfen; wenn der Zustandswert gültig ist und die Rangfolgenummer mit der zuletzt empfangenen Zelle mit einem gültigen Zustandswert eine Sequenz bildet, kehrt die Zustandsmaschine in den Zustand "synchronisiert" (10) zurück, die vorige Zelle wird jedoch als fehlerhaft eingefügte Zelle betrachtet, und es wird eine Anzahl von Bytes der empfangenen Zelle und eventuell der folgenden empfangenen Zelle verworfen, die gleich der Anzahl von Bytes der fehlerhaft eingefügten Zelle ist; wenn der Zustandswert gültig ist, jedoch eine Rangfolgenummer besitzt, welche die Rangfolgenummer der zuletzt empfangenen Zelle mit einem gültigen Zustandswert um zwei übersteigt, wird unterstellt, daß die vorige Zelle eine Zelle mit falscher Rangfolgenummer ist, obwohl ein ungültiger Zustandswert vorgelegen hat; die empfangene Zelle wird akzeptiert, und die Zustandsmaschine kehrt in den Zustand "synchronisiert" (10) zurück;
- im Zustand "nicht in Sequenz" (12) wird die empfangene Zelle verworfen, wenn der Zustandswert ungültig ist, und die Zustandsmaschine kehrt in den Zustand "Start" (1) zurück, während dann, wenn der Zustandswert gültig ist und die Rangfolgenummer in Sequenz mit der zuletzt empfangenen Zelle, die eine Rangfolgenummer besitzt, eine Sequenz bildet, die Zustandsmaschine in den Zustand "synchronisiert" (10) zurückkehrt und die zuvor empfangene Zelle als fehlerhaft eingefügt betrachtet wird und von der empfangenen Zelle und eventuell der folgenden empfangenen Zelle eine der Zahl der Bytes der fehlerhaft eingefügten Zelle entsprechende Anzahl von Bytes, verworfen wird; wenn der Zustandswert gültig ist und die Rangfolgenummer mit der Rangfolgenummer der zuvor empfangenen Zelle eine Sequenz bildet, unterstellt die Zustandsmaschine, daß Zellen fehlen, und fügt zwischen die zuvor empfangene Zelle und in die zuletzt empfangene Zelle einen Anzahl fiktiver Zellen ein, die gleich der Anzahl der fehlenden Zellen ist; die zuletzt empfangene Zelle wird akzeptiert, und die Zustandsmaschine kehrt zurück zum Zustand "synchronisiert" (10); wenn der Zustandswert gültig, aber die Rangfolgenummer nicht in einem der zwei genannten Zustände ist, verwirft die Zustandsmaschine die empfangene Zelle und geht über zum Zustand "nicht synchronisiert" (9).

## Claims

1. Method for detecting and compensating for missing and/or incorrectly inserted cells on the reception side in the transmission of ATM cells with an adaptation layer AAL of type 1, the cells being assigned a sequence number and an error detection and correction code which indicates whether or not the sequence number, and additional information dependent thereon, have been transmitted correctly, and it is decided on the basis of these data whether a cell is rejected or handled further and whether a cell is missing or incorrectly inserted cells are present, characterized in that, immediately with each reception of a cell with the aid of the error detection and correction code assigned to said cell, the freedom from errors of the sequence number contained in the respective cell, and of the aforesaid additional information, is checked, in that, if freedom from errors is determined, the respective cell is handled further, otherwise, by contrast, it is rejected, in that, in addition, a comparison is made, with reference to the last two successive cells provided for further handling, to determine whether the sequence numbers contained in these two cells comply with a specified sequence, in that, in the event that the comparison reveals a failure of one or more cells, one or more dummy cells with an equal overall number of bytes is, or are, inserted between the two cells which have just been compared with one another, and in that in the event that the comparison reveals that, of the two cells which have been compared with one another, the cell received first is regarded as having been incorrectly inserted with respect to the sequence number, this thus incorrectly inserted cell is nevertheless handled further, but for the purpose of compensation an equal number of bytes of the cell received last during the comparison, and possibly of a cell following that, are rejected.

2. Method according to Claim 1, characterized in that a state machine with five states is used, namely "Start" (8), "not synchronized" (9), "synchronized" (10), "invalid" (11) and "not in sequence" (12), the state machine experiencing the following evolution and acting on the cells in the following fashion:
- in the initial state "Start" (1), the cells are rejected until a valid state value is received, after which the state machine goes into the state (9) "not synchronized";
- in this state "not synchronized" (9), the cells remain rejected until a sequence number is received which forms a sequence with the previous one, as a result of which the received cell is accepted and the state machine goes into the state "synchronized" (10); if a cell arrives with an invalid state value, the state machine returns to the state "Start" (8)
- in the state "synchronized" (10), the cells are accepted as long as the state value is valid and the sequence number of a received cell forms a sequence with the previous cell; if the state value is invalid, the state machine goes into the state "invalid" (11), but the received cell is nevertheless accepted; if the state value is valid and the sequence number does not form a sequence with the previous cell, the state machine goes into the state "not in sequence" (12), and the received cell is likewise accepted;
- in the state "invalid" (11), the state machine takes a decision with regard to the previously received cell with the invalid state value when it receives the following cell; if the state value is invalid again, the state machine returns to the state (1) "Start", and the received cell is rejected in the process; if the state value is valid and the sequence number forms a sequence with the last cell received with a valid state value, the state machine returns to the state "synchronized" (10), but the previous cell is considered to be an incorrectly inserted cell, and a number of bytes of the received cell, and possibly the following received cell, which is equal to the number of bytes of the incorrectly inserted cell is rejected; if the state value is valid but has a sequence number which exceeds by two the sequence number of the last cell received with a valid state value, it is assumed that the previous cell is a cell with an incorrect sequence number although an invalid state value was present; the received cell is accepted and the state machine returns to the state "synchronized" (10);
- in the state "not in sequence" (12), the received cell is rejected if the state value is invalid and the state machine returns to the state "Start" (1), whereas, if the state value is valid and the sequence number is in sequence with the last cell received which has a sequence number, the state machine returns to the state "synchronized" (10), and the previously received cell is considered to be incorrectly inserted and a number of bytes corresponding to the number of bytes of the incorrectly inserted cell is rejected from the received cell, and possibly the following received cell; if the state value is valid and the sequence number forms a sequence with the sequence number of the previously received cell, the state machine assumes that cells are missing and inserts a number of dummy cells, which is equal to the number of missing cells, between the previously received cell and into the cell received last; the cell received last is accepted and the state machine returns to the state "synchronized" (10); if the state value is valid but the sequence number is not in one of the two aforesaid states, the state machine rejects the received cell and goes into the state "not synchronized" (9).

## Revendications

1. Procédé de détection et de compensation de l'absence et/ou de l'insertion incorrecte de cellules du côté réception lors du transfert de cellules ATM avec une couche d'adaptation AAL de type 1, un numéro de précédence ainsi qu'un code de détection et de correction d'erreur étant attribués aux cellules, indiquant si le numéro de précédence et une information supplémentaire qui en dépend ont été transmis correctement ou non, et sur base de ces données, une décision est prise quant au rejet ou au traitement ultérieur d'une cellule et quant à l'absence d'une cellule ou à une erreur d'insertion de cellules,
caractérisé en ce que, lors de chaque réception d'une cellule, on vérifie directement à l'aide du code de détection et de correction d'erreur associé à cette cellule l'absence d'erreur dans le numéro de précédence contenu dans chaque cellule respective ainsi que ladite information supplémentaire,
en ce que, lors de la détection de l'absence d'une erreur, la cellule respective continue d'être traitée, et dans l'autre cas est par contre rejetée,
en ce qu'en outre, sur les deux dernières cellules successives prévues pour un traitement ultérieur, on compare si les numéros de précédence contenus dans ces deux cellules respectent une séquence imposée,
en ce qu'au cas où la comparaison indique la perte d'une ou de plusieurs cellules, une ou plusieurs cellules fictives présentant un même nombre total de bytes sont insérées entre les deux cellules qui viennent d'être comparées l'une à l'autre,
et en ce qu'au cas où la comparaison indique que parmi les deux cellules comparées l'une à l'autre, la cellule reçue en premier est considérée comme ayant été insérée erronément, sur base de son numéro de précédence, cette cellule ainsi insérée erronément continue cependant d'être traitée, néanmoins comme compensation, un nombre de bytes égal à celui de la cellule reçue en dernier lieu pour la comparaison, et éventuellement d'une cellule qui la suit, est rejeté.

2. Procédé selon la revendication 1, caractérisé en ce que l'on utilise une machine d'état à cinq états, à savoir "démarrage" (8), "non synchronisé" (9), "synchronisé" (10), "invalide" (11) et "non en séquence" (12), la machine d'état suivant l'évolution ci-dessous et agissant sur les cellules de la manière suivante :
- à l'état initial "démarrage" (1), les cellules sont rejetées jusqu'à réception d'une valeur d'état valide, suite à quoi la machine d'état passe dans l'état (9) "non synchronisé";
- dans cet état "non synchronisé" (9), les cellules sont rejetées jusqu'à la réception d'un numéro de précédence qui forme une séquence avec le précédent, suite à quoi la cellule reçue est acceptée et la machine d'étape passe à l'état "synchronisé" (10); si une cellule arrive avec une valeur d'état invalide, la machine d'état revient dans l'état "démarrage" (8);
- à l'état "synchronisé" (10), les cellules sont acceptées tant que la valeur d'état est valide et que le numéro de précédence d'une cellule reçue forme une séquence avec celui de la cellule précédente; si la valeur d'état est invalide, la machine d'état revient à l'état "non valide" (11), mais la cellule reçue est cependant acceptée; si la valeur d'état est valide et si le numéro de précédence ne forme pas de séquence avec celui de la cellule précédente, la machine d'état passe à l'état "non en séquence" (12) et la cellule reçue est également acceptée;
- à l'état "invalide" (11), la machine d'état prend une décision concernant la cellule reçue précédemment avec la valeur d'état invalide lorsqu'elle reçoit la cellule suivante; si la valeur d'état est de nouveau invalide, la machine revient à l'état (1) "démarrage", et la cellule reçue est ainsi rejetée; si la valeur d'état est valide et si le numéro de précédence forme une séquence avec celui de la cellule reçue en dernier lieu avec une valeur d'état valide, la machine d'état revient à l'état "synchronisé" (10), la cellule précédente étant cependant considérée comme une cellule insérée erronément et un nombre de bytes de la cellule reçue et éventuellement de la cellule reçue ensuite, qui est identique au nombre de bytes de la cellule insérée erronément, est rejeté; si la valeur d'état est valide mais possède un numéro de précédence qui dépasse de deux le numéro de précédence de la cellule reçue en dernier lieu avec une valeur d'état valide, on suppose que la cellule précédente est une cellule avec un faux numéro de précédence bien que sa valeur d'état soit invalide; la cellule reçue est acceptée et la machine d'état revient à l'état "synchronisé" (10);
- à l'état "non en séquence " (12), la cellule reçue est rejetée si la valeur d'état est invalide, et la machine d'état revient à l'état "démarrage" (1) tandis que si la valeur d'état est valide et si le numéro de précédence est en séquence avec celui de la cellule reçue en dernier lieu, et qui possède un numéro de précédence, la machine d'état revient à l'état "synchronisé" (10) et la cellule reçue précédemment est considérée comme ayant été insérée erronément et un nombre de bytes qui correspond au nombre de bytes de la cellule insérée erronément est rejeté de la cellule reçue et éventuellement des cellules reçues ensuite; si la valeur d'état est valide et si le numéro de précédence forme une séquence avec le numéro de précédence de la cellule reçue précédemment, la machine d'état déduit que des cellules manquent et insère entre la cellule reçue précédemment et la cellule reçue en dernier lieu un nombre de cellules fictives qui est égal au nombre des cellules manquantes; la cellule reçue en dernier lieu est acceptée et la machine d'état revient à l'état "synchronisé" (10); si la valeur d'état est valide mais si le numéro de précédence n'est pas dans l'un desdits deux états, la machine d'état rejette la cellule reçue et passe à l'état "non synchronisé" (9).
